# EUROPÄISCHE PATENTSCHRIFT

(11) **EP 3 246 228 B1**
(45) Veröffentlichungstag und Bekanntmachung des Hinweises auf die Patenterteilung: **07.08.2019**
(21) Anmeldenummer: 17170384.6
(22) Anmeldetag: 10.05.2017
(51) Int. Cl.: B62D 13/06, G05D 1/00

(54) **VERFAHREN UND VORRICHTUNG ZUR FAHRTSTEUERUNG EINES KRAFTFAHRZEUGS**
METHOD AND DEVICE FOR CONTROLLING THE DRIVE OF A MOTOR VEHICLE
PROCÉDÉ ET DISPOSITIF DE COMMANDE D'UN VÉHICULE AUTOMOBILE

(30) Priorität: 19.05.2016 DE 102016208630
(43) Veröffentlichungstag der Anmeldung: 22.11.2017
(73) Patentinhaber: VOLKSWAGEN AKTIENGESELLSCHAFT, 38440 Wolfsburg (DE); Audi AG, 85045 Ingolstadt (DE)
(72) Erfinder: Hüger, Philipp, 38471 Rühen (DE); Brosig, Stefan, 29386 Hankensbüttel (DE); Vogt, Hermann, 82072 Eichstätt (DE); Gebert, Hermann, 10715 Berlin (DE); Ziebart, Sascha, 38104 Braunschweig (DE)

(56) Entgegenhaltungen:
- WO-A1-2016/054620
- DE-A1-102012 002 304
- US-A1- 2012 029 731

## Beschreibung

Die Erfindung betrifft ein Verfahren und eine Vorrichtung zur Fahrtsteuerung eines Kraftfahrzeugs.

Kraftfahrzeuge umfassen in der Regel Bedienelemente, um deren Fahrt, insbesondere deren Fahrtrichtung, Fahrtgeschwindigkeit und Lenkwinkel zu steuern. Derartige Bedienelemente können beispielsweise ein Gaspedal und eine Bremse umfassen. Auch können derartige Bedienelemente eine Gangschaltung für einen Fahrtrichtungswechsel umfassen. Bekannt sind auch Drehdrückstelleinrichtungen, um einen Winkel zwischen einem Fahrzeug und einem Anhänger einzustellen.

Von besonderem Interesse ist auch die Fahrtsteuerung eines Kraftfahrzeugs in einem sogenannten Gespann. Das Gespann umfasst hierbei das Kraftfahrzeug (Zugfahrzeug) und mindestens einen Anhänger, der mit dem Kraftfahrzeug mechanisch verbunden ist.

Die DE 10 2014 108 486 A1 offenbart ein Verfahren zur Fahrtsteuerung eines Kraftfahrzeugs, ein Touchscreen-Gerät und ein Fahrtsteuerungssystem. Die Druckschrift offenbart, dass ein Steuermittel des Kraftfahrzeugs derart kabellos mit einem Touchscreen-Gerät kommunikationsverbunden ist, das eine selbsttätige Fahrt des Kraftfahrzeugs mittels des Touchscreen-Geräts fernsteuerbar ist. Hierbei kann z.B. ein Knickwinkel zwischen einer Längsachse eines Zugfahrzeugs und einer Längsachse eines Anhängers fortlaufend geregelt werden. Während der Fahrt kann durch ein longitudinales Verschieben eines aktiven Teils auf dem Touchscreen von einem Benutzer eine Fahrgeschwindigkeit eingestellt werden. Weiter kann während der Fahrt durch laterales Verschieben des aktiven Teils eine laterale Bewegungsrichtung des Kraftfahrzeugs bzw. der Knickwinkel eingestellt werden.

Die WO 2016/054620 A1 ist als nächstliegender Stand der Technik nach dem Oberbegriff der Ansprüche 1 und 13 zu sehen und offenbart ein Fahrerassistenzsystem für Automobilfahrzeuge.

Die US 2012/029731 A1 offenbart eine Fernbedienung für Fahrzeuge.

Die DE 10 2012 002 304 A1 offenbart eine Vorrichtung zum automatisierten Führen eines Kraftwagens, welche dazu ausgelegt ist, während einer Fahrt des Kraftwagens diesen selbstständig zu führen.

Bezüglich der Einstellung der Fahrtrichtung offenbart die Druckschrift nur, dass diese vor Fahrtbeginn auf dem Touchscreen vorgegeben werden kann. Diese erfordert einen separaten Bedienvorgang, insbesondere ein separates Drücken eines sogenannten Softkeys, der auf dem Touchscreen dargestellt ist.

Es stellt sich das technische Problem, ein Verfahren und eine Vorrichtung zur Fahrtsteuerung eines Kraftfahrzeugs zu schaffen, welche die Bedienung zur Steuerung des Kraftfahrzeugs vereinfacht.

Die Lösung des technischen Problems ergibt sich durch die Gegenstände mit den Merkmalen der Ansprüche 1 und 13. Weitere vorteilhafte Ausgestaltungen der Erfindung ergeben sich aus den Unteransprüchen.

Vorgeschlagen wird ein Verfahren zur Fahrtsteuerung eines Kraftfahrzeugs. Das Kraftfahrzeug weist ein Lenksystem und ein Antriebssystem auf. Hierbei bezeichnet ein Lenksystem die Gesamtheit von Elementen, die zur Einstellung eines Lenkwinkels dienen oder dienen können. Das Lenksystem kann ein Vorderachslenksystem sein. Alternativ kann das Lenksystem ein Hinterachslenksystem sein. Auch kann das Lenksystem sowohl ein Vorderachs- als auch ein Hinterachslenksystem umfassen. Entsprechend bezeichnet ein Antriebssystem die Gesamtheit von Elementen, die zum Antrieb des Fahrzeugs dienen oder dienen können.

Das Lenksystem und das Antriebssystem sind durch mindestens eine Steuereinrichtung steuerbar. Dies bedeutet, dass ein Betrieb der Systeme durch die mindestens eine Steuereinrichtung oder eine Mehrzahl von Steuereinrichtungen steuerbar sein können. Eine Steuereinrichtung kann insbesondere ein Steuergerät des Kraftfahrzeugs sein.

Weiter ist eine Lage eines kontaktierten Teilbereichs eines Eingabebereichs einer berührungsempfindlichen Eingabeeinrichtung bestimmbar. Eine berührungsempfindliche Eingabeeinrichtung kann beispielsweise als sogenannter Touchscreen ausgebildet sein oder einen solchen umfassen. Die berührungsempfindliche Eingabeeinrichtung kann hierbei Teil eines Endgeräts, insbesondere eines portablen Endgeräts, sein. Beispielsweise kann die berührungsempfindliche Eingabeeinrichtung Teil eines Mobilfunktelefons, eines Tablet-PC oder eines weiteren Endgeräts sein. Die berührungsempfindliche Eingabeeinrichtung weist den Eingabebereich auf. Der Eingabebereich kann einen Bereich, insbesondere eine Fläche, bezeichnen, wobei durch die Eingabeeinrichtung ein Ausgangssignal erzeugt werden kann, wenn die Eingabeeinrichtung im Bereich des Eingabebereichs kontaktiert, beispielsweise berührt, wird.

Es kann z.B. angenommen werden, dass ein Eingabebereich rechteckig oder quadratisch ausgebildet ist. Für die folgenden Ausführungen kann auf folgendes Referenzkoordinatensystem Bezug genommen werden. Ein Mittelpunkt des Koordinatensystems kann einem geometrischen Mittelpunkt des Eingabebereichs entsprechen. Eine Längsachse des Koordinatensystems kann sich parallel zu Längsseiten des Eingabebereichs erstrecken. Eine Querachse kann entsprechend parallel zu Querseiten des Eingabebereichs orientiert sein. Längs- und Querachse können senkrecht zueinander orientiert sein.

Wird der Eingabebereich beispielsweise von einem portablen Endgerät ausgebildet, so kann die Längsachse von einem Nutzer weg orientiert sein. Die Längsachse kann insbesondere auch einer Längsachse eines in dem Eingabebereich darstellbaren Bildes entsprechen.

Zum Kontaktieren des Eingabebereichs kann ein geeignetes Eingabemittel dienen, insbesondere eine Extremität eines Nutzers, z.B. ein Finger, oder ein vom Nutzer verschiedenes Eingabemittel, beispielsweise ein Eingabestift.

Hierbei kann die Eingabeeinrichtung verschiedene Ausgangssignale erzeugen, wenn der Eingabebereich in verschiedenen Teilbereichen kontaktiert wird. Die Ausgangssignale können hierbei abhängig von einer Lage des kontaktierten Teilbereichs sein. Insbesondere kann in Abhängigkeit der Ausgangssignale bestimmt werden, in welchem Teilbereich des Eingabebereichs die Eingabeeinrichtung kontaktiert wurde. Das Ausgangssignal kann die Lage kodieren.

Weiter ist in Abhängigkeit der Lage des kontaktierten Teilbereichs ein Steuersignal erzeugbar. Das Steuersignal kann hierbei in Abhängigkeit des vorhergehend erläuterten Ausgangssignals erzeugt werden. Hierfür können verschiedenen Ausgangssignalen verschiedene Steuersignale zugeordnet sein. Auch kann das Steuersignal das Ausgangssignal sein.

Weiter stellt die mindestens eine Steuereinrichtung in Abhängigkeit des Steuersignals oder durch das Steuersignal eine Fahrtrichtung des Kraftfahrzeugs und eine Fahrtgeschwindigkeit des Kraftfahrzeugs und mindestens einen Lenkwinkel des Kraftfahrzeugs ein.

Weist das Fahrzeug ein Vorderachslenksystem auf, so kann der Lenkwinkel des Vorderachssystems eingestellt werden. Weist das Fahrzeug ein Hinterachslenksystem auf, so kann der Lenkwinkel des Hinterachssystems eingestellt werden. Weist das Fahrzeug sowohl ein Vorder- als auch ein Hinterachslenksystem auf, so kann sowohl der Lenkwinkel des Vorderachs- als auch des Hinterachslenksystems eingestellt werden.

Hierzu kann das Ausgangssignal der Eingabeeinrichtung oder das bereits erzeugte Steuersignal an die mindestens eine Steuereinrichtung übertragen werden. Die Übertragung kann hierbei mittels einer vorzugsweise drahtlosen Signalübertragung, beispielsweise über WLAN oder über Bluetooth™, erfolgen. Selbstverständlich ist jedoch auch eine drahtgebundene Signalübertragung vorstellbar. Wird das Ausgangssignal der Eingabeeinrichtung an die Steuereinrichtung übertragen, so kann diese das Steuersignal erzeugen. Somit wird auch eine Fernsteuerung der Fahrt des Kraftfahrzeugs beschrieben, wobei die Eingabeeinrichtung die Fernsteuerungseinrichtung oder einen Teil davon bereitstellt.

Eine Fahrtrichtung des Kraftfahrzeugs kann insbesondere eine Vorwärts-Richtung oder eine Rückwärts-Richtung sein.

Weiter wird in Abhängigkeit der Lage des kontaktierten Teilbereichs eine Winkelinformation erzeugt. Erfindungsgemäß wird in Abhängigkeit der Lage des kontaktierten Teilbereichs zumindest eine Fahrtrichtungsinformation erzeugt. Weiter erfindungsgemäß wird in Abhängigkeit der Lage des kontaktierten Teilbereichs eine Geschwindigkeitsinformation erzeugt.

Das Steuersignal kann hierbei in Abhängigkeit dieser Informationen erzeugt werden oder diese Informationen kodieren.

Mit anderen Worten ist mittels der berührungsempfindlichen Eingabeeinrichtung oder in Abhängigkeit eines Ausgangssignals der Eingabeeinrichtung ein Steuersignal erzeugbar, welches sowohl zur Einstellung der Fahrtrichtung als auch zur Einstellung der Geschwindigkeit dient. Gegebenenfalls kann das Steuersignal auch zur Einstellung des Lenkwinkels dienen.

Das Steuersignal kann hierbei insbesondere auch durch Ausführen einer Kontaktbewegung in dem Eingabebereich erzeugt werden. So kann das Steuersignal auch in Abhängigkeit einer Anzahl von zeitlich aufeinanderfolgenden Lagen des kontaktierten Teilbereichs während einer Kontaktbewegung erzeugt oder verändert werden. Somit ist es möglich, durch Ausführen einer Kontaktbewegung verschiedene Geschwindigkeiten und/oder verschiedene Fahrtrichtungen und/oder verschiedene Lenkwinkel einzustellen. Die Kontaktbewegung bezeichnet eine Bewegung, während derer der Eingabebereich ununterbrochen kontaktiert wird, z.B. durch das Eingabemittel.

Das Steuersignal kann hierbei während der Fahrt, also auch während einer Bewegung, des Kraftfahrzeugs erzeugt werden.

Das Verfahren ermöglicht somit in vorteilhafter Weise, dass durch ununterbrochenes Betätigen der Eingabeeinrichtung sowohl die Fahrtrichtung als auch Fahrtgeschwindigkeit und gegebenenfalls auch der Lenkwinkel des Kraftfahrzeugs eingestellt werden können. Insbesondere wird somit in vorteilhafter Weise ermöglicht, während einer Fahrt des Kraftfahrzeugs auch die Fahrtrichtung durch eine ununterbrochene Betätigung der Eingabeeinrichtung einzustellen, insbesondere auch zu ändern. Somit ist kein separates Betätigen eines Softkeys zur Einstellung der Fahrtrichtung notwendig, wie in der DE 10 2014 108 486 A1 beschrieben.

Dies vereinfacht in vorteilhafter Weise eine Bedienung der Eingabeeinrichtung und somit die Fahrtsteuerung des Kraftfahrzeugs. Insbesondere kann somit in vorteilhafter Weise erreicht werden, dass ein Nutzer drei genannte Größen einstellen kann, ohne wiederholt auf den Eingabebereich der Eingabeeinrichtung zu blicken, um ein Eingabemittel wie gewünscht zu positionieren. Hierdurch kann der Nutzer in vorteilhafter Weise während der Bedienung ununterbrochen oder mit einer verringerten Anzahl von Unterbrechungen z.B. zum Fahrzeug schauen, um die eingestellten Größen visuell zu kontrollieren. Dies aber erhöht eine Betriebssicherheit.

In einer weiteren Ausführungsform umfasst der Eingabebereich einen Vorwärtsbereich und einen Rückwärtsbereich. Hierbei kann der Eingabebereich ausschließlich den Vorwärtsbereich und den Rückwärtsbereich umfassen oder neben den genannten Bereichen auch mindestens einen weiteren Bereich, insbesondere einen sogenannten Neutralbereich. Ein Bereich bezeichnet hierbei einen Teilbereich des Eingabebereichs.

Die Fahrtrichtungsinformation kodiert oder repräsentiert eine Vorwärts-Richtung, falls die Lage des kontaktierten Bereichs im Vorwärtsbereich liegt. Die Fahrtrichtungsinformation kodiert oder repräsentiert eine Rückwärts-Richtung, falls die Lage des kontaktierten Bereichs im Rückwärtsbereich liegt. Auch kann eine neutrale Fahrtrichtungsinformation, d.h. weder eine Vorwärts- noch eine Rückwärts-Richtung, kodiert werden, wenn die Lage des kontaktierten Teilbereichs in dem Neutralbereich liegt.

Bezug nehmend auf das erläuterte Referenzkoordinatensystem kann der Vorwärtsbereich entlang der Längsachse vor dem Rückwärtsbereich angeordnet sein. Sowohl Vorwärts- als auch Rückwärtsbereich können sich hierbei über die gesamte Breite des Eingabebereichs erstrecken. Umfasst der Eingabebereich auch einen Neutralbereich, so kann der Neutralbereich entlang der Längsachse vor dem Rückwärtsbereich, jedoch hinter dem Vorwärtsbereich, angeordnet sein. Auch der Neutralbereich kann sich über die gesamte Breite des Eingabebereichs erstrecken.

Es ist möglich, das der Vorwärts- und Rückwärtsbereich entlang der Längsachse gleiche Längen aufweisen. Weiter kann auch ein Neutralbereich die gleiche Länge entlang der Längsachse aufweisen. Vorzugsweise ist jedoch die Länge des Neutralbereichs entlang der Längsachse kleiner als die Längen des Vorwärts- und Rückwärtsbereichs.

Mit anderen Worten kann eine vordere Hälfte oder ein Teil einer vorderen Hälfte eines Eingabebereichs den Vorwärtsbereich umfassen, wobei eine hintere Hälfte oder ein Teil davon den Rückwärtsbereich umfasst.

Ein Vorwärtsbereich und ein Rückwärtsbereich umfasst hierbei eine Vielzahl von kontaktierbaren Teilbereichen, wobei in Abhängigkeit der Lagen dieser Teilbereiche jeweils voneinander verschiedene Geschwindigkeitsinformationen und/oder Lenkwinkelinformationen erzeugt werden können.

Hierdurch ergibt sich in vorteilhafter Weise eine intuitiv einfache Bedienung der Eingabeeinrichtung zur Fahrtsteuerung des Kraftfahrzeugs. Bewegt ein Nutzer ein Eingabemittel beispielsweise vom Vorwärtsbereich in den Rückwärtsbereich, so kann die Fahrtrichtung von der Vorwärts- in die Rückwärts-Richtung geändert werden. Gleichzeitig kann durch die entsprechende Bewegung eine Geschwindigkeit und gegebenenfalls auch ein Lenkwinkel verändert werden. Somit sind keine separaten oder unterbrochenen Bedienbewegungen notwendig, um alle der genannten Größen einzustellen.

In einer weiteren Ausführungsform nimmt eine Höhe der von der Geschwindigkeitsinformation kodierten Geschwindigkeit mit zunehmendem Abstand der Lage des kontaktierten Bereichs von einer Referenzlage zu, wobei der Abstand entlang einer ersten Richtung erfasst wird. Die erste Richtung kann insbesondere parallel zu der erläuterten Längsachse orientiert sein. Die Referenzlage kann insbesondere den geometrischen Mittelpunkt des Eingabebereichs umfassen oder diesem entsprechen. Wird eine Bewegung eines Eingabemittels entlang der Längsachse als longitudinale Bewegung bezeichnet und eine Bewegung entlang der Querachse als laterale Bewegung, so führt nur der Anteil einer Bewegung entlang der Längsachse (longitudinaler Bewegungsanteil) zu einer Veränderung bzw. zu einer Einstellung der Geschwindigkeit, wobei der Bewegungsanteil parallel zur Querachse (lateraler Bewegungsanteil) nicht zu einer Geschwindigkeitsänderung führt.

Es ist vorstellbar, dass der Eingabebereich verschiedene Geschwindigkeitsbereiche umfasst, wobei beim Kontaktieren des Eingabebereichs in einem der Geschwindigkeitsbereiche jeweils eine Geschwindigkeitsinformation erzeugt wird, die die gleiche Geschwindigkeit kodiert oder repräsentiert. So kann beispielsweise der vorhergehend erläuterte Vorwärtsbereich einen oder mehrere Geschwindigkeitsbereiche umfassen, wobei diese Geschwindigkeitsbereiche entlang der Längsachse aufeinanderfolgend angeordnet sind. Geschwindigkeitsbereiche können sich hierbei jeweils über die gesamte Breite des Eingabebereichs erstrecken. Entsprechend kann auch der Rückwärtsbereich mehrere Geschwindigkeitsbereiche umfassen, die ebenfalls entlang der Längsachse aufeinanderfolgend angeordnet sind. Mit zunehmendem Abstand der entsprechenden Geschwindigkeitsbereiche kann auch eine von der Geschwindigkeitsinformation kodierte Geschwindigkeit zunehmen, wenn die Lage des kontaktierten Bereichs in dem jeweiligen Geschwindigkeitsbereich liegt.

Hierdurch ergibt sich in vorteilhafter Weise eine vereinfachte Einstellung der Geschwindigkeit.

In einer weiteren Ausführungsform wird in Abhängigkeit der Lage des kontaktierten Teilbereichs eine Winkelinformation erzeugt. Diese Information kann eine Lenkwinkel- oder eine Knickwinkelinformation sein. Hierbei kann durch einen Nutzer vorgegeben werden, ob die Winkelinformation eine Lenkwinkelinformation oder eine Knickwinkelinformation ist. Insbesondere kann die Information dann einen Lenk- oder Knickwinkel kodieren. Die Lenkwinkelinformation, aber auch die Knickwinkelinformation, dient zur Einstellung mindestens eines Lenkwinkels. Der Lenkwinkel kann insbesondere der Lenkwinkel eines Vorderachs- und/oder eines Hinterachslenksystems sein.

Die Winkelinformation kann auch eine gewünschte Fahrtorientierung des Kraftfahrzeugs oder des Anhängers kodieren, insbesondere relativ zu dessen Längsachse. Der/Die Lenkwinkel kann dann derart eingestellt werden, dass das Kraftfahrzeug oder der Anhänger sich bei der Fahrt entlang einer Bewegungstrajektorie mit der gewünschten Fahrtorientierung bewegt.

Es ist möglich, dass der/die Lenkwinkel nach der Einstellung und bei der Bewegung des Kraftfahrzeugs geregelt werden, insbesondere können also Abweichungen von einem gewünschten Lenkwinkel oder einer gewünschten Fahrtorientierung, minimiert werden.

Nachfolgend werden Verfahren zur Bestimmung der Winkelinformation in Abhängigkeit der Lage beschrieben.

Hierdurch ergibt sich in vorteilhafter Weise eine vereinfachte Einstellung des Lenkwinkels.

In einer weiteren Ausführungsform wird als Information zur Einstellung des Lenkwinkels eine Lenkwinkelinformation erzeugt, falls die Fahrtrichtungsinformation eine Vorwärts-Richtung kodiert. Weiter wird als Information zur Einstellung des Lenkwinkels eine Knickwinkelinformation erzeugt, falls die Fahrtrichtungsinformation eine Rückwärts-Richtung kodiert.

Mit anderen Worten kann in Abhängigkeit der Lage des kontaktierten Teilbereichs eine Knickwinkelinformation erzeugt werden, falls die Lage des kontaktierten Teilbereichs im Rückwärts-Bereich liegt, und eine Lenkwinkelinformation erzeugt werden, falls die Lage des kontaktierten Teilbereichs im Vorwärts-Bereich liegt.

In Abhängigkeit dieser Knickwinkelinformation kann dann ein entsprechender Lenkwinkel bestimmt werden, der zum Einstellen des Knickwinkels erforderlich ist. In diesem Fall wird also die Knickwinkelinformation in eine Lenkwinkelinformation umgerechnet, beispielsweise durch die Steuereinrichtung. Diese Umrechnung erfolgt nicht, falls die Fahrtrichtungsinformation eine Vorwärts-Richtung kodiert.

Wird eine Lenkwinkelinformation erzeugt oder aus einer Knickwinkelinformation berechnet, so kann in Abhängigkeit dieser Lenkwinkelinformation der Lenkwinkel eines VorderachsLenksystems und/oder eines Hinterachs-Lenksystems eingestellt werden. Hierbei kann der Lenkwinkel eines Vorderachs- und/oder Hinterachs-Lenksystems derart bestimmt und geregelt werden, dass das Kraftfahrzeug sich möglichst genau entlang einer gewünschten Bewegungstrajektorie bewegt.

Der Knickwinkel bezeichnet hierbei einen Winkel zwischen einer Fahrzeuglängsachse des Kraftfahrzeugs und einer Längsachse eines Anhängers.

Hierdurch ergibt sich in vorteilhafter Weise eine vereinfachte Bedienung der Eingabeeinrichtung zur Fahrtsteuerung, da bei Vorwärtsfahrt durch die Lage des kontaktierten Teilbereichs unmittelbar der Lenkwinkel eingestellt werden kann, wobei bei einer gewünschten Rückwärtsfahrt unmittelbar der Knickwinkel eingestellt werden kann. Somit ist es für einen Nutzer nicht erforderlich, einen Lenkwinkel derart einzustellen, dass sich ein gewünschter Knickwinkel bei Rückwärtsfahrt ergibt.

In einer weiteren Ausführungsform nimmt eine Höhe des von der Winkelinformation, also der Lenkwinkel- oder Knickwinkelinformation, kodierten Winkels mit zunehmendem Abstand der Lage des kontaktierten Bereichs von einer Referenzlage zu, wobei der Abstand entlang einer weiteren Richtung erfasst wird, wobei die weitere Richtung senkrecht zu der ersten Richtung orientiert ist. Somit führt nur der Anteil ein lateraler Bewegungsanteil zu einer Veränderung bzw. zu einer Einstellung des Lenkwinkels, wobei longitudinale Bewegungsanteil nicht zu einer Lenkwinkeländerung führt.

Alternativ ist die Höhe des von der Winkelinformation kodierten Winkels proportional zu einem Winkel zwischen der ersten Richtung und einer Verbindungslinie zwischen der Lage des kontaktierten Bereichs und der Referenzlage.

Hierdurch wird in vorteilhafter Weise eine einfache und zuverlässige Einstellung von Lenk- oder Knickwinkel durch eine laterale Bedienbewegung oder eine Kombination von lateraler und longitudinaler Bedienbewegung ermöglicht.

In einer weiteren Ausführungsform wird eine Information zur Fahrtsteuerung nur dann erzeugt, falls der Eingabebereich in einem aktiven Bereich kontaktiert wird, wobei der aktive Bereich beim Ausführen einer Kontaktbewegung in dem Eingabebereich entsprechend der Kontaktbewegung verschoben wird. Der aktive Bereich kann hierbei eine Dimension aufweisen, die derart gewählt wird, dass ein Eingabemittel, beispielsweise ein Finger eines Nutzers oder der vorhergehend erläuterte Eingabestift, von dem aktiven Bereich umfasst wird, wenn das Eingabemittel den Eingabereich berührt.

Der aktive Bereich kann hierbei eine gewünschte Geometrie, vorzugsweise jedoch eine Kreisgeometrie, aufweisen.

Bewegt ein Nutzer das Eingabemittel mit einer Kontaktbewegung in dem Eingabebereich, so wird der aktive Bereich entsprechend dieser Kontaktbewegung verschoben. Dies bedeutet, dass der aktive Bereich in jeder Position der ununterbrochenen Kontaktbewegung das kontaktierende Eingabemittel umfasst. Hierdurch wird in vorteilhafter Weise eine Betriebssicherheit des Verfahrens erhöht, da Kontaktierungen, die außerhalb des aktiven Bereichs erfolgen, z.B. eine Kontaktierung durch einen weiteren Finger, keine Steuersignale erzeugen oder verfälschen können.

Es kann notwendig sein, vor dem Kontaktieren des Eingabebereichs durch den Nutzer, visuell den aktiven Bereich zu erfassen. Kontaktiert der Nutzer nämlich den Eingabebereich außerhalb des aktiven Bereichs, so erfolgt keine Erzeugung einer Information zur Fahrtsteuerung.

In einer weiteren Ausführungsform ist der aktive Bereich initial in einem zentralen Bereich des Eingabebereichs angeordnet. Initial kann bedeuten, dass vor dem Initial-Zeitpunkt noch keine Kontaktierung des Eingabebereichs, insbesondere im aktiven Bereich, erfolgt ist oder eine Kontaktierung des aktiven Bereichs unterbrochen wurde. Beispielsweise kann der aktive Bereich in dieser initialen Lage angeordnet werden, wenn das Verfahren gestartet wird und bevor ein Eingabemittel den Eingabebereich kontaktiert.

Hierdurch ergibt sich in vorteilhafter Weise eine weitere Verbesserung der Betriebssicherheit, da der zentrale Bereich des Eingabebereichs vorzugsweise eine Geschwindigkeit von 0, eine neutrale Fahrtrichtung und einen Lenkwinkel von 0 kodiert.

In einer weiteren Ausführungsform wird bei Kontaktverlust eine Information zum Anhalten des Kraftfahrzeugs erzeugt. Bei Kontaktverlust kann der aktive Bereich wieder in dem zentralen Bereich des Eingabebereichs angeordnet werden. Die Information zum Anhalten des Kraftfahrzeugs kann beispielsweise erzeugt werden, indem eine Geschwindigkeitsinformation erzeugt wird, die die Geschwindigkeit 0 kodiert. Selbstverständlich kann auch eine Bremsinformation erzeugt werden, wobei in Abhängigkeit der Bremsinformation mindestens eine Bremseinrichtung aktiviert wird.

Hierdurch erhöht sich in vorteilhafter Weise eine Betriebssicherheit.

In einer weiteren Ausführungsform wird in Abhängigkeit der Geschwindigkeitsinformation eine Schwingung der berührungsempfindlichen Eingabeeinrichtung erzeugt. Hierbei kann die berührungsempfindliche Eingabeeinrichtung eine Einrichtung zur Schwingungserzeugung, beispielsweise einen Piezokristall, umfassen. Hierbei ist mindestens eine Eigenschaft der Schwingung für verschiedene Geschwindigkeiten oder verschiedene Beträge der Geschwindigkeiten verschieden.

In diesem Fall kann also in Abhängigkeit der Lage eines kontaktierten Teilbereichs eine Schwingung der berührungsempfindlichen Eingabeeinrichtung erzeugt werden, wobei mindestens eine Eigenschaft der Schwingung von der Lage abhängig ist.

Hierdurch ergibt sich in vorteilhafter Weise eine weiter verbesserte Betriebssicherheit bei der Fahrtsteuerung, da einem Nutzer ein haptisches Feedback über eine aktuell eingestellte Geschwindigkeit gegeben wird.

In einer weiteren Ausführungsform ist mindestens eine weitere Eigenschaft der Schwingung für verschiedene Fahrtrichtungen verschieden. Beispielsweise kann ein Puls-Pause-Schwingungssignal erzeugt werden, wobei während einer Pulszeitdauer die Schwingung erzeugt wird, wobei während einer Pausenzeitdauer keine Schwingung erzeugt wird. Hierbei kann für eine Vorwärts-Richtung ein Puls-Pause-Verhältnis eingestellt werden, welches von einem Puls-Pause-Verhältnis bei einer Rückwärts-Richtung verschieden ist.

Hierdurch ergibt sich in vorteilhafter Weise eine weiter verbesserte Betriebssicherheit, da ein haptisches Feedback auch bezüglich einer eingestellten Fahrtrichtung an den Nutzer übermittelt werden kann.

Es ist selbstverständlich vorstellbar, dass eine weitere Eigenschaft der Schwingung für verschiedene Winkel verschieden ist.

In einer weiteren Ausführungsform werden beim Kontaktieren zumindest eines Teilbereichs eines neutralen Bereichs des Eingabebereichs der Eingabeeinrichtung zumindest eine Fahrtrichtungsinformation und eine Geschwindigkeitsinformation erzeugt, wobei die Geschwindigkeitsinformation einen Wert von 0 kodiert. Weiter kann eine Winkelinformation erzeugt werden. Es ist vorstellbar, dass der neutrale Bereich einen Teilbereich des vorhergehend erläuterten Vorwärtsbereichs und einen Teilbereich des vorhergehend erläuterten Rückwärtsbereichs überlagert. Somit ist es in vorteilhafter Weise möglich, einen Lenkwinkel oder Knickwinkel und eine Fahrtrichtung einzustellen, wobei das Fahrzeug sich (noch) nicht bewegt. Beim Kontaktieren eines weiteren Teilbereichs des neutralen Bereichs kann keine Fahrtrichtungsinformation, keine Geschwindigkeitsinformation und auch keine Winkelinformation erzeugt werden.

Hierdurch wird in vorteilhafter Weise eine Betriebssicherheit des Verfahrens verbessert, da vor dem Anfahren bereits eine Richtung des Fahrzeugs bzw. des Gespanns und eine gewünschte Fahrtrichtung eingestellt werden kann.

In einer weiteren Ausführungsform wird ein Lenkwinkel eines Hinterachslenksystems des Fahrzeugs eingestellt. In diesem Fall kann das Lenksystem also ein Hinterachslenksystem sein oder ein solches zusätzlich zum Vorderachslenksystem umfassen. Insbesondere kann zusätzlich zum Lenkwinkel eines Vorderachslenksystems ein Lenkwinkel des Hinterachslenksystems eingestellt werden. Dies wurde vorhergehend erläutert.

Hierbei kann, wie vorhergehend erläutert, der Lenkwinkel des Hinterachslenksystems in Abhängigkeit der Winkelinformation bestimmt werden. Z.B. kann die Winkelinformation den Lenkwinkel des Hinterachslenksystems kodieren. Vorzugsweise kodiert die Winkelinformation aber eine gewünschte Fahrtorientierung des Kraftfahrzeugs oder des Anhängers oder einen Lenkwinkel eines Vorderachssystems kodieren. In diesem Fall kann der Lenkwinkel des Hinterachslenksystems in Abhängigkeit dieser Winkelinformation berechnet werden.

Hierdurch ergibt sich in vorteilhafter Weise, dass auch Fahrzeuge mit Hinterachslenksystemen gesteuert werden können, was den Anwendungsbereich des vorgeschlagenen Verfahrens erhöht.

In einer weiteren Ausführungsform wird der Eingabebereich der Eingabeeinrichtung deaktiviert, wenn mindestens eine Betriebsbedingung für den Betrieb des Kraftfahrzeugs nicht erfüllt ist. Selbstverständlich kann eine Mehrzahl von Betriebsbedingungen existieren. Somit kann der Eingabebereich der Eingabeeinrichtung aktiviert werden oder aktiviert bleiben, wenn alle oder ausgewählte Betriebsbedingungen erfüllt sind.

Eine Betriebsbedingung ist z.B. erfüllt, wenn alle Fahrzeugtüren geschlossen sind und nicht erfüllt, wenn mindestens eine Fahrzeugtür nicht geschlossen ist. Der Schließzustand von Fahrzeugtüren kann beispielsweise mittels geeigneter Einrichtungen detektiert werden.

Eine weitere Betriebsbedingung ist z.B. erfüllt, wenn sich ein Wahlhebel einer Automatikschaltung in einer vorbestimmten Stellung, beispielsweise in einer Neutral-Stellung, befindet und nicht erfüllt, wenn sich der Wahlhebel in einer davon abweichenden Stellung befindet. Die Stellung des Wahlhebels kann mittels geeigneter Einrichtungen detektiert werden.

Eine weitere Betriebsbedingung ist z.B. erfüllt, wenn ein angehängter Anhänger detektiert wurde und nicht erfüllt, wenn kein angehängter Anhänger detektiert wurde. Ob ein Anhänger angehängt ist oder nicht, kann durch geeignete Detektionsmittel detektiert werden.

Eine weitere Betriebsbedingung ist z.B. erfüllt, wenn sich ein Fahrzeugschlüssel außerhalb des Fahrzeugs befindet und nicht erfüllt, wenn sich der Fahrzeugschlüssel innerhalb des Fahrzeugs befindet. Ob sich der Fahrzeugschlüssel außerhalb oder innerhalb des Fahrzeugs befindet, kann durch geeignete Detektionsmittel detektiert werden.

Ist der Eingabebereich deaktiviert, so erzeugt die Eingabeeinrichtung z.B. kein Ausgangssignal oder ein vorbestimmtes Deaktivierungssignal.

Eine Information darüber, ob eine Betriebsbedingung erfüllt ist oder nicht, oder eine Information zur Bestimmung, ob eine Betriebsbedingung erfüllt ist oder nicht, kann von dem Kraftfahrzeug an die Eingabeeinrichtung, insbesondere drahtlos, übertragen werden.

Eine Betriebsbedingung kann insbesondere auch eine Startbedingung sein.

Wird oder ist der Eingabebereich deaktiviert, so kann zumindest in einem Teilbereich eine Information über die Deaktivierung dargestellt werden, insbesondere also darüber, dass keine Fahrtsteuerung des Kraftfahrzeugs aufgrund von Eingaben im Eingabebereich möglich ist. Insbesondere kann ein Informationsbereich zumindest einem Teilbereich des Eingabebereichs oder dem gesamten Eingabebereich überlagert werden, wobei die Information im Informationsbereich dargestellt wird.

Auch kann eine Information über die Art der nicht erfüllten Betriebsbedingung(en) und/oder über den Grad deren Erfüllung dargestellt werden.

Hierdurch kann in vorteilhafter Weise eine Betriebssicherheit des Kraftfahrzeugs erhöht werden.

Weiter vorgeschlagen wird eine Vorrichtung zur Fahrtsteuerung eines Kraftfahrzeugs. Die Vorrichtung dient hierbei zur Durchführung eines Verfahrens gemäß einer der in dieser Offenbarung beschriebenen Ausführungsformen. Somit ist die Vorrichtung entsprechend ausgebildet. Das Kraftfahrzeug weist ein Lenk- und ein Antriebssystem auf, wobei das Lenksystem und das Antriebssystem durch mindestens eine Steuereinrichtung steuerbar sind. Weiter umfasst die Vorrichtung mindestens eine berührungsempfindliche Eingabeeinrichtung und mindestens eine Auswerteeinrichtung. Weiter ist eine Lage eines kontaktierten Teilbereichs eines Eingabebereichs der Eingabeeinrichtung bestimmbar. Weiter ist mittels der Auswerteeinrichtung in Abhängigkeit der Lage des kontaktierten Teilbereichs ein Steuersignal erzeugbar, wobei mittels der Steuereinrichtung in Abhängigkeit des Steuersignals oder durch das Steuersignal eine Fahrtrichtung des Kraftfahrzeugs und eine Fahrtgeschwindigkeit des Kraftfahrzeugs und mindestens ein Lenkwinkel des Kraftfahrzeugs einstellbar ist.

Erfindungsgemäß ist in Abhängigkeit der Lage des kontaktierten Teilbereichs und eine Geschwindigkeitsinformation erzeugbar. Weiter erfindungsgemäß ist in Abhängigkeit der Lage des kontaktierten Teilbereichs zumindest eine Fahrtrichtungsinformation erzeugbar.

Die Auswerteeinrichtung kann hierbei einen Mikrocontroller umfassen oder als solcher ausgebildet sein.

Weiter kann die Auswerteeinrichtung Teil der berührungsempfindlichen Eingabeeinrichtung sein. Auch kann die Auswerteeinrichtung im Kraftfahrzeug angeordnet sein. Z.B. kann die Auswerteeinrichtung durch die Steuereinrichtung bereitgestellt werden.

Somit wird auch ein System zur Fahrtsteuerung eines Kraftfahrzeugs beschrieben, welches die vorhergehend erläuterte Vorrichtung und die Steuereinrichtung umfasst.

Die Erfindung wird anhand eines Ausführungsbeispiels näher erläutert. Die Figuren zeigen:
- Fig. 1: eine schematische Draufsicht auf ein Gespann,
- Fig. 2: eine schematische Draufsicht auf eine berührungsempfindliche Eingabeeinrichtung in einem ersten Betriebszustand und
- Fig. 3: eine schematische Draufsicht auf die in Fig. 2 dargestellte Eingabeeinrichtung in einem weiteren Betriebszustand.

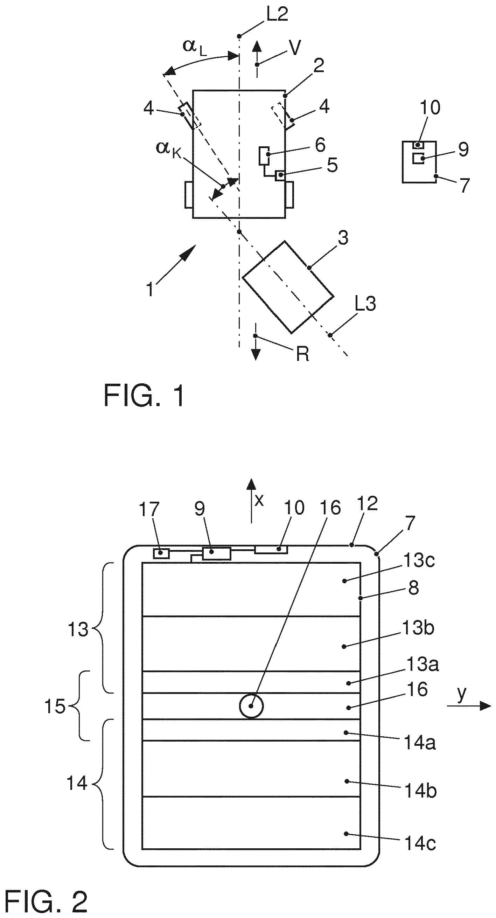

In Fig. 1 ist eine schematische Draufsicht auf ein Gespann 1 dargestellt, welches ein Kraftfahrzeug 2 und einen Anhänger 3 umfasst. Der Anhänger 3 ist hierbei mechanisch mit dem Kraftfahrzeug 2 verbunden. Dargestellt ist eine Längsachse L2 des Kraftfahrzeugs 2 und eine Längsachse L3 des Anhängers 3. Ein Knickwinkel α_{K} bezeichnet einen Winkel zwischen diesen Längsachsen L2, L3. Weiter dargestellt ist ein Lenkwinkel α_{L}, der zwischen lenkbaren Rädern 4 des Kraftfahrzeugs 2 und der Längsachse L2 des Fahrzeugs eingestellt ist, wobei der Lenkwinkel α_{L} den Lenkwinkel für ein Vorderachslenksystem bezeichnet.

Das Kraftfahrzeug 2 umfasst eine Signalübertragungseinrichtung 5 und eine Steuereinrichtung 6. Mittels der Steuereinrichtung 6 ist ein Steuersignal zur Steuerung eines Lenksystems und eines Antriebssystems des Kraftfahrzeugs 2 erzeugbar. Insbesondere können mittels der Steuereinrichtung 6 eine Fahrtrichtung des Kraftfahrzeugs 2, eine Geschwindigkeit des Kraftfahrzeugs 2 sowie der Lenkwinkel α_{L} des Kraftfahrzeugs 2 eingestellt werden.

Eine Vorwärts-Richtung des Kraftfahrzeugs 2 ist durch einen Pfeil V dargestellt. Eine Rückwärts-Richtung des Kraftfahrzeugs ist durch einen Pfeil R dargestellt.

Die Fahrt des Kraftfahrzeugs 2 ist mittels einer Eingabeeinrichtung 7 steuerbar. Hierbei umfasst die Eingabeeinrichtung 7 einen Eingabebereich 8 (siehe Fig. 2) und eine Auswerteeinrichtung 9. Weiter umfasst die berührungsempfindliche Eingabeeinrichtung 7 eine Signalübertragungseinrichtung 10. Mittels der Signalübertragungseinrichtungen 5, 10 können Signale zwischen der berührungsempfindlichen Eingabeeinrichtung 7 und dem Kraftfahrzeug 2, insbesondere der Steuereinrichtung 6, übertragen werden.

Somit ist in Fig. 1 auch ein System und eine Vorrichtung zur Fahrtsteuerung des Kraftfahrzeugs 2 dargestellt, wobei die Vorrichtung die berührungsempfindliche Eingabeeinrichtung 7 und die Auswerteeinrichtung 9 und das System neben dieser Vorrichtung auch die Steuereinrichtung 6 umfasst.

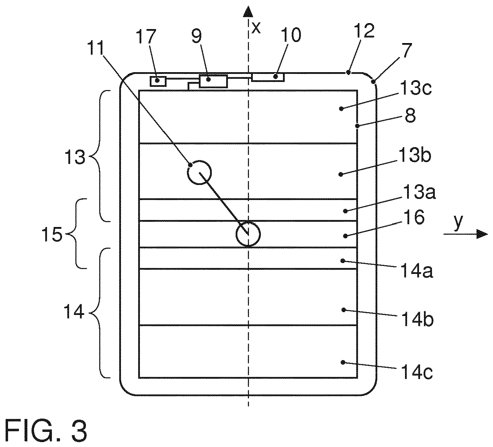

Mittels der berührungsempfindlichen Eingabeeinrichtung 7 ist eine Lage eines kontaktierten Teilbereichs 11 (siehe Fig. 3) des Eingabebereichs 8 der berührungsempfindlichen Eingabeeinrichtung 7 bestimmbar. In Abhängigkeit der Lage ist ein Steuersignal erzeugbar, beispielsweise durch die Auswerteeinrichtung 9 oder durch die Steuereinrichtung 6. In Abhängigkeit des Steuersignals ist dann die Fahrtrichtung des Kraftfahrzeugs 2, die Fahrtgeschwindigkeit des Kraftfahrzeugs 2 und der Lenkwinkel α_{L} des Kraftfahrzeugs 2 einstellbar. Hierzu wird in Abhängigkeit der Lage des kontaktierten Teilbereichs 11 eine Fahrtrichtungsinformation, eine Geschwindigkeitsinformation und eine Winkelinformation erzeugt.

Fig. 2 zeigt eine schematische Draufsicht auf eine erfindungsgemäße berührungsempfindliche Eingabeeinrichtung 7. Diese umfasst ein Gehäuse 12 und einen berührungsempfindlichen Eingabebereich 8. Der Eingabebereich 8 umfasst einen Vorwärtsbereich 13 und einen Rückwärtsbereich 14. Weiter umfasst der Eingabebereich 8 einen neutralen Bereich 15.

Dargestellt ist ein Koordinatensystem der Eingabeeinrichtung 7 bzw. des Eingabebereichs 8. Das Koordinatensystem umfasst eine Längsachse x und eine Querachse y. Ein Ursprung 16 des Koordinatensystems entspricht einem geometrischen Mittelpunkt des Eingabebereichs 8.

Hierbei ist dargestellt, dass der Vorwärtsbereich 13 entlang der Längsachse x vor dem Rückwärtsbereich 14 angeordnet ist. Weiter ist ein Großteil des Vorwärtsbereichs 13 entlang der Längsachse x vor einem Großteil des neutralen Bereichs 15 angeordnet, wobei sich jedoch Teilbereiche des Vorwärtsbereichs 13 und des neutralen Bereichs 15 überschneiden. Ebenfalls ist ein Großteil des neutralen Bereichs 15 entlang der Längsachse x vor dem Rückwärtsbereich 14 angeordnet, wobei sich ein Teilbereich des neutralen Bereichs 15 und des Rückwärtsbereichs 14 überschneiden.

Weiter dargestellt ist, dass der Vorwärtsbereich 13 drei Teilbereiche 13a, 13b, 13c umfasst. Liegt die Lage des kontaktierten Bereichs 11 (siehe Fig. 3) im ersten Teilbereich 13a des Vorwärtsbereichs 13, so wird eine Fahrtrichtungsinformation erzeugt, die eine Vorwärts-Richtung V kodiert, wobei eine Geschwindigkeitsinformation erzeugt wird, die eine Geschwindigkeit von 0 kodiert. Liegt die Lage des kontaktierten Bereichs 11 im zweiten Teilbereich 13b des Vorwärtsbereichs 13, so wird eine Fahrtrichtungsinformation erzeugt, die eine Vorwärts-Richtung V kodiert, wobei eine Geschwindigkeitsinformation erzeugt wird, die eine erste festgelegte Geschwindigkeit kodiert. Liegt die Lage des kontaktierten Bereichs 11 im dritten Teilbereich 13c des Vorwärtsbereichs 13, so wird eine Fahrtrichtungsinformation erzeugt, die eine Vorwärts-Richtung V kodiert, wobei eine Geschwindigkeitsinformation erzeugt wird, die eine zweite festgelegte Fahrtgeschwindigkeit kodiert, wobei die zweite festgelegte Fahrtgeschwindigkeit höher als die erste festgelegte Fahrtgeschwindigkeit ist.

Entsprechend umfasst der Rückwärtsbereich 14 drei Teilbereiche 14a, 14b, 14c. Liegt die Lage des kontaktierten Bereichs 11 im ersten Teilbereich 14a des Rückwärtsbereichs 14, so wird eine Fahrtrichtungsinformation erzeugt, die eine Rückwärts-Richtung R codiert, wobei eine Fahrtgeschwindigkeitsinformation erzeugt wird, die eine Fahrtgeschwindigkeit von 0 kodiert. Liegt die Lage des kontaktierten Bereichs 11 im zweiten Teilbereich 14b des Rückwärtsbereichs, so wird eine Fahrtrichtungsinformation erzeugt, die eine Rückwärts-Richtung R kodiert, wobei eine Fahrtgeschwindigkeitsinformation erzeugt wird, die die erste festgelegte Geschwindigkeit kodiert. Liegt die Lage des kontaktierten Bereichs 11 im dritten Teilbereich 14c des Rückwärtsbereichs 14, so wird eine Fahrtrichtungsinformation erzeugt, die eine Rückwärts-Richtung R kodiert, wobei eine Fahrtgeschwindigkeitsinformation erzeugt wird, die die zweite festgelegte Geschwindigkeit kodiert.

Der zentrale Bereich 15 umfasst neben dem ersten Teilbereich 13a des Vorwärtsbereichs 13 und dem ersten Teilbereich 14a des Rückwärtsbereichs 14 einen weiteren Teilbereich 16, der entlang der Längsachse x zwischen diesen ersten Teilbereichen 13a, 14a angeordnet ist. Liegt die Lage des kontaktierten Bereichs 11 in diesem Teilbereich 16, so wird keine Fahrtrichtungsinformation erzeugt oder eine Fahrtrichtungsinformation erzeugt, die keine Richtung kodiert, wobei weiter keine Fahrtgeschwindigkeitsinformation oder eine Fahrtgeschwindigkeitsinformation erzeugt wird, die eine Fahrtgeschwindigkeit von 0 kodiert. Allerdings kann eine Winkelinformation erzeugt werden. Alternativ kann aber auch keine Winkelinformation oder eine Winkelinformation, die einen Winkel von Null kodiert, erzeugt werden.

Somit ist ersichtlich, dass eine Höhe der von der Geschwindigkeitsinformation kodierten Geschwindigkeit mit zunehmenden Abstand der Lage des kontaktierten Bereichs 11 von einer Referenzlage zunimmt, wobei die Referenzlage im geometrischen Mittelpunkt des Eingabebereichs 8 angeordnet ist oder diesen umfasst. Der Abstand wird hierbei jedoch nur entlang der Längsachse x erfasst.

In jedem der Teilbereiche 13a, 13b, 13c, 14a, 14b, 14c, 16 kann in Abhängigkeit der Lage des kontaktierten Teilbereichs 11 eine Information zur Einstellung des Lenkwinkels α_{L} (Lenkwinkelinformation) oder eine Information zur Einstellung eines Knickwinkels α_{K} (Knickwinkelinformation) erzeugt werden.

Insbesondere kann als Information zur Einstellung des Lenkwinkels α_{L} eine Lenkwinkelinformation erzeugt werden, falls die Lage des kontaktierten Teilbereichs 11 in einem Teilbereich 13a, 13b, 13c des Vorwärtsbereichs 13 oder in dem Teilbereich 16 des neutralen Bereichs 15 angeordnet ist. Andernfalls kann als Information zur Einstellung des Lenkwinkels α_{L} eine Knickwinkelinformation erzeugt werden, falls die Lage des kontaktierten Teilbereichs 11 in einem Teilbereich 14a, 14b, 14c des Rückwärtsbereichs 14 angeordnet ist. In Abhängigkeit der Knickwinkelinformation kann beispielsweise die Auswerteeinrichtung 9 oder die Steuereinrichtung 6 (siehe Fig. 1) den entsprechenden Lenkwinkel einstellen, der erforderlich ist, um den gewünschten Knickwinkel α_{K} bereitzustellen.

In Fig. 3 ist eine schematische Draufsicht auf die in Fig. 2 dargestellte berührungsempfindliche Eingabeeinrichtung 7 in einem weiteren Betriebszustand dargestellt. Hierbei ist insbesondere ein durch ein Eingabemittel des Nutzers, beispielsweise einen Finger, kontaktierter Teilbereich des Eingabebereichs 8 der Eingabeeinrichtung 7 dargestellt. Da die Lage des kontaktierten Teilbereichs 11 in dem zweiten Teilbereich 13b des Vorwärtsbereichs 13 (siehe Fig. 2) angeordnet ist, kodiert die Fahrtrichtungsinformation eine Vorwärts-Richtung V. Die Geschwindigkeitsinformation kodiert die erste festgelegte Fahrtgeschwindigkeit. Die Winkelinformation kodiert einen Lenkwinkel, wobei die Höhe des Lenkwinkels proportional zu einem Abstand des kontaktierten Teilbereichs 11 von der vorhergehend erläuterten Referenzlage entlang der Querachse y ist.

Weiter sind in Fig. 2 und Fig. 3 jeweils eine Einrichtung 17 zur Schwingungserzeugung dargestellt, wobei in Abhängigkeit der Geschwindigkeitsinformation bzw. in Abhängigkeit der Lage des kontaktierten Teilbereichs 11 eine Schwingung der berührungsempfindlichen Eingabeeinrichtung 7 erzeugt wird. Hierbei ist mindestens eine Eigenschaft der Schwingung für verschiedene Geschwindigkeiten bzw. für verschiedene Lagen voneinander verschieden. Auch kann eine weitere Eigenschaft der Schwingung für verschiedene Fahrtrichtungen verschieden sein.

### Bezugszeichenliste

- 1: Gespann
- 2: Kraftfahrzeug
- 3: Anhänger
- 4: lenkbare Räder
- 5: Signalübertragungseinrichtung
- 6: Steuereinrichtung
- 7: berührungsempfindliche Eingabeeinrichtung
- 8: Eingabebereich
- 9: Auswerteeinrichtung
- 10: Signalübertragungseinrichtung
- 11: kontaktierter Teilbereich
- 12: Gehäuse
- 13: Vorwärtsbereich
- 13a, 13b, 13c: Teilbereiche des Vorwärtsbereichs
- 14: Rückwärtsbereich
- 14a, 14c, 14c: Teilbereiche des Rückwärtsbereichs
- 15: neutraler Bereich
- 16: Teilbereich des neutralen Bereichs
- 17: Einrichtung zur Schwingungserzeugung
- V: Vorwärts-Richtung
- R: Rückwärts-Richtung
- L2: Längsachse des Kraftfahrzeugs
- L3: Längsachse des Anhängers
- α_{K}: Knickwinkel
- αL: Lenkwinkel
- x: Längsachse
- y: Querachse

## Patentansprüche

1. Verfahren zur Fahrtsteuerung eines Kraftfahrzeugs (2) in einem Gespann, wobei das Kraftfahrzeug (2) ein Lenksystem und ein Antriebssystem aufweist, wobei das Lenksystem und das Antriebssystem durch mindestens eine Steuereinrichtung (6) steuerbar sind,
wobei eine Lage eines kontaktierten Teilbereichs (11) eines Eingabebereichs (8) einer berührungsempfindlichen Eingabeeinrichtung (7) bestimmbar ist, wobei in Abhängigkeit der Lage des kontaktierten Teilbereichs (11) ein Steuersignal erzeugbar ist, wobei die mindestens eine Steuereinrichtung (6) in Abhängigkeit des Steuersignals oder durch das Steuersignal eine Fahrtrichtung des Kraftfahrzeugs (2) und eine Fahrtgeschwindigkeit des Kraftfahrzeugs (2) und mindestens einen Lenkwinkel (α_{L}) des Kraftfahrzeugs (2) einstellt, wobei in Abhängigkeit der Lage des kontaktierten Teilbereichs (11) eine Winkelinformation erzeugt wird, wobei als Information zur Einstellung des Lenkwinkels (α_{L}) eine Knickwinkelinformation erzeugt wird, falls eine Fahrtrichtungsinformation eine Rückwärts-Richtung (R) kodiert,
**dadurch gekennzeichnet, dass**
als Information zur Einstellung des Lenkwinkels (α_{L}) eine Lenkwinkelinformation erzeugt wird, falls die Fahrtrichtungsinformation eine Vorwärts-Richtung (V) kodiert, wobei in Abhängigkeit der Lage des kontaktierten Teilbereichs (11) die Fahrtrichtungsinformation, die eine Vorwärts-Richtung oder eine Rückwärts-Richtung kodiert, und eine Geschwindigkeitsinformation erzeugt wird.

2. Verfahren nach Anspruch 1, **dadurch gekennzeichnet, dass** der Eingabebereich (8) einen Vorwärtsbereich (13) und einen Rückwärtsbereich (14) umfasst, wobei die Fahrtrichtungsinformation eine Vorwärts-Richtung (V) kodiert, falls die Lage des kontaktierten Bereichs (11) im Vorwärtsbereich (13) liegt, wobei die Fahrtrichtungsinformation eine Rückwärts-Richtung (R) kodiert, falls die Lage des kontaktierten Bereichs (11) im Rückwärtsbereich (14) liegt.

3. Verfahren nach Anspruch 1 oder 2, **dadurch gekennzeichnet, dass** eine Höhe der von der Geschwindigkeitsinformation kodierten Geschwindigkeit mit zunehmendem Abstand der Lage des kontaktierten Bereichs (11) von einer Referenzlage zunimmt, wobei der Abstand entlang einer ersten Richtung erfasst wird.

4. Verfahren nach einem der vorangegangenen Ansprüche, **dadurch gekennzeichnet, dass** eine Höhe des von der Winkelinformation kodierten Winkels mit zunehmendem Abstand der Lage des kontaktierten Teilbereichs (11) von einer Referenzlage zunimmt, wobei der Abstand entlang einer weiteren Richtung erfasst wird, wobei die weitere Richtung senkrecht zu ersten Richtung orientiert ist, oder dass Höhe des von der Winkelinformation kodierten Winkels proportional zu einem Winkel zwischen der ersten Richtung und einer Verbindungslinie zwischen der Lage des kontaktierten Teilbereichs (11) und der Referenzlage ist.

5. Verfahren nach einem der vorangegangenen Ansprüche, **dadurch gekennzeichnet, dass** eine Information zur Fahrtsteuerung nur dann erzeugt wird, falls der Eingabebereich (8) in einem aktiven Bereich kontaktiert wird, wobei der aktive Bereich beim Ausführen einer Kontaktbewegung in dem Eingabebereich (8) entsprechend der Kontaktbewegung verschoben wird.

6. Verfahren nach einem der vorangegangenen Ansprüche, **dadurch gekennzeichnet, dass** der aktive Bereich initial in einem zentralen Bereich des Eingabebereichs (8) angeordnet ist.

7. Verfahren nach einem der vorangegangenen Ansprüche, **dadurch gekennzeichnet, dass** bei Kontaktverlust eine Information zum Anhalten des Kraftfahrzeugs (2) erzeugt wird.

8. Verfahren nach einem der vorangegangenen Ansprüche, **dadurch gekennzeichnet, dass** in Abhängigkeit der Geschwindigkeitsinformation eine Schwingung der berührungsempfindlichen Eingabeeinrichtung (7) erzeugt wird, wobei mindestens eine Eigenschaft der Schwingung für verschiedene Geschwindigkeiten oder verschiedene Beträge der Geschwindigkeiten verschieden ist.

9. Verfahren nach Anspruch 8, **dadurch gekennzeichnet, dass** mindestens eine weitere Eigenschaft der Schwingung für verschiedene Fahrtrichtungen verschieden ist.

10. Verfahren nach einem der vorangegangenen Ansprüche, **dadurch gekennzeichnet, dass** ein Lenkwinkel eines Hinterachslenksystems des Kraftfahrzeugs (2) eingestellt wird.

11. Verfahren nach einem der vorangegangenen Ansprüche, **dadurch gekennzeichnet, dass** der Eingabebereich (8) der Eingabeeinrichtung (7) deaktiviert wird, wenn mindestens eine Betriebsbedingung für den Betrieb des Kraftfahrzeugs (2) nicht erfüllt ist.

12. Verfahren nach einem der vorangegangenen Ansprüche, **dadurch gekennzeichnet, dass** beim Kontaktieren zumindest eines Teilbereichs eines neutralen Bereichs (15) des Eingabebereichs der berührungsempfindlichen Eingabeeinrichtung (7) zumindest eine Fahrtrichtungsinformation und eine Geschwindigkeitsinformation erzeugt wird, wobei die Geschwindigkeitsinformation einen Wert Null kodiert.

13. Vorrichtung zur Fahrtsteuerung eines Kraftfahrzeugs (2) in einem Gespann, wobei das Kraftfahrzeug (2) ein Lenksystem und ein Antriebssystem aufweist, wobei das Lenksystem und das Antriebssystem durch mindestens eine Steuereinrichtung (6) steuerbar sind,
wobei die Vorrichtung mindestens eine berührungsempfindliche Eingabeeinrichtung (7) und mindestens eine Auswerteeinrichtung (6) umfasst, wobei eine Lage eines kontaktierten Teilbereichs (11) eines Eingabebereichs (8) der berührungsempfindlichen Eingabeeinrichtung (7) bestimmbar ist, wobei mittels der Auswerteeinrichtung (6) in Abhängigkeit der Lage des kontaktierten Teilbereichs (11) ein Steuersignal erzeugbar ist, wobei mittels der Steuereinrichtung (6) in Abhängigkeit des Steuersignals oder durch das Steuersignal eine Fahrtrichtung des Kraftfahrzeugs (2) und eine Fahrtgeschwindigkeit des Kraftfahrzeugs (2) und mindestens ein Lenkwinkel (α_{L}) des Kraftfahrzeugs (2) einstellbar ist, wobei in Abhängigkeit der Lage des kontaktierten Teilbereichs (11) eine Winkelinformation erzeugt wird, wobei als Information zur Einstellung des Lenkwinkels (α_{L}) eine Knickwinkelinformation erzeugt wird, falls eine Fahrtrichtungsinformation eine Rückwärts-Richtung (R) kodiert,
**dadurch gekennzeichnet, dass**
als Information zur Einstellung des Lenkwinkels (α_{L}) eine Lenkwinkelinformation erzeugt wird, falls die Fahrtrichtungsinformation eine Vorwärts-Richtung (V) kodiert, wobei in Abhängigkeit der Lage des kontaktierten Teilbereichs (11) die Fahrtrichtungsinformation, die eine Vorwärts-Richtung oder eine Rückwärts-Richtung kodiert, und eine Geschwindigkeitsinformation erzeugbar ist.

## Claims

1. Method for drive control of a motor vehicle (2) in an articulated vehicle combination,
wherein the motor vehicle (2) comprises a steering system and a drive system,
wherein the steering system and the drive system are controllable by at least one evaluation device (6),
wherein a position of a contacted section (11) of an input area (8) of a touch-sensitive input device (7) may be determined,
wherein a control signal may be generated as a function of the position of the contacted section (11),
wherein the at least one evaluation device (6) sets a travel direction of the motor vehicle (2) and a travel speed of the motor vehicle (2) and at least one steering angle (α_{L}) of the motor vehicle (2), as a function of the control signal or through the control signal,
wherein angle information is generated as a function of the position of the contacted section (11), wherein bend angle information is generated as information for adjusting the steering angle (α_{L}) if the direction information encodes a reverse direction (R),
**characterized in that**
steering angle information is generated as information for adjusting the steering angle (α_{L}) if the direction information encodes a forward direction (V), wherein the direction information that encodes a forward direction or a reverse direction, and a speed information is generated as a function of the position of the contacted section (11).

2. Method according to claim 1, **characterized in that** the input area (8) comprises a forward area (13) and a rearward area (14), wherein the direction information encodes a forward direction (V) if the position of the contacted section (11) lies in the forward area (13), and wherein the direction information encodes a reverse direction (R) if the position of the contacted section (11) lies in the rearward area (14).

3. Method according to claim 1 or 2, **characterized in that** the height of the speed encoded by the speed information increases with increasing distance of the position of the contacted section (11) from a reference position, wherein the distance is detected in a first direction.

4. Method according to any one of the preceding claims, **characterized in that** the height of the angle encoded by the angle information increases with increasing distance of the position of the contacted section (11) from a reference position, wherein the distance in a further direction is detected, wherein the further direction is oriented perpendicular to the first direction, or the height of the angle encoded by the angle information is proportional to an angle between the first direction and a connecting line between the position of the contacted section (11) and the reference position.

5. Method according to any one of the preceding claims, wherein information for the steering control is generated only if the input area (8) is contacted in an active area, wherein, upon making a contact movement in the input area (8), the active area is displaced corresponding to the contact movement.

6. Method according to any one of the preceding claims, **characterized in that** the active area is initially arranged in a central area of the input area (8).

7. Method according to any one of the preceding claims, **characterized in that** information for stopping the motor vehicle (2) is generated upon loss of contact.

8. Method according to any one of the preceding claims, **characterized in that** in response to the speed information, vibration of the touch-sensitive input device (7) is generated, wherein at least one property of the vibration is different for different speeds or different amounts of the speeds.

9. Method according to claim 8, **characterized in that** at least one further property of the vibration is different for different directions of travel.

10. Method according to any one of the preceding claims, **characterized in that** a steering angle of a rear axle steering system of the motor vehicle (2) is set.

11. Method according to any one of the preceding claims, **characterized in that** the input area (8) of the input device (7) is deactivated when at least one operating condition for the operation of the motor vehicle (2) is not met.

12. Method according to any one of the preceding claims, **characterized in that** upon contacting at least a portion of a neutral area (15) of the input area of the touch-sensitive input device (7), at least direction information and speed information is generated, wherein the speed information encodes a value zero.

13. Device for drive control of a motor vehicle (2) in an articulated vehicle combination, wherein the motor vehicle (2) comprises a steering system and a drive system, wherein the steering system and the drive system are controllable by at least one evaluation device (6),
wherein the device comprises at least one touch-sensitive input device (7) and at least one evaluation device (6), wherein a position of a contacted section (11) of an input area (8) of the touch-sensitive input device (7) may be determined, wherein a control signal may be generated by means of the evaluation device (6) as a function of the position of the contacted section (11), wherein by means of the evaluation device (6) a direction of travel of the motor vehicle (2) and a travel speed of the motor vehicle (2) and at least one steering angle (α_{L}) of the motor vehicle (2) may be adjusted as a function of the control signal or through the control signal, wherein angle information is generated as a function of the position of the contacted section (11), wherein bend angle information is generated as information for setting the steering angle (α_{L}) if direction information encodes a reverse direction (R),
**characterized in that**
steering angle information is generated as the information for adjusting the steering angle (α_{L}) if the direction information encodes a forward direction (V) as a function of the location of the contacted section (11), the travel direction information which encodes a forward direction or a reverse direction, and a speed information is generated.

## Revendications

1. Procédé de contrôle de la conduite d'un véhicule (2) dans un attelage, le véhicule (2) comprenant un système de direction et un système d'entraînement, le système de direction et le système d'entraînement pouvant être contrôlés par au moins un dispositif de commande (6),
une position d'une partie contactée (11) d'une zone d'entrée (8) d'un dispositif d'entrée tactile (7) pouvant être déterminée, moyennant quoi, en fonction de la position de la partie contactée (11), un signal de commande peut être généré, l'au moins un dispositif de commande (6) réglant, en fonction du signal de commande ou par l'intermédiaire du signal de commande, une direction de marche du véhicule (2) et une vitesse du véhicule (2) et au moins un angle de direction (α_{L}) du véhicule (2), moyennant quoi, en fonction de la position de la partie contactée (11), une information d'angle est générée, une information d'angle de pliage étant générée en tant qu'information concernant le réglage de l'angle de direction (α_{L}), si une information de direction de marche code une direction de marche arrière (R),
**caractérisée en ce que**
en tant qu'information pour le réglage de l'angle de direction (α_{L}), une information d'angle de direction est générée si l'information de direction de marche code une direction de marche avant (V), moyennant quoi, en fonction de la position de la partie contactée (11), l'information de direction de marche, qui code une direction de marche avant ou une direction de marche arrière, et une information de vitesse sont générées.

2. Procédé selon la revendication 1, **caractérisé en ce que** la zone d'entrée (8) comprend une zone de marche avant (13) et une zone de marche arrière (14), l'information de direction de marche codant une direction de marche avant (V) su la position de la zone contactée (11) se trouve dans la zone de marche avant (13), l'information de direction de marche codant une direction de marche arrière (R) si la position de la zone contactée (11) se trouve dans la zone de marche arrière (14).

3. Procédé selon la revendication 1 ou 2, **caractérisé en ce qu'**une valeur de la vitesse codée par l'information de vitesse augmente lorsque la distance entre la position de la zone contactée (11) et une position de référence augmente, la distance étant mesurée le long d'une première direction.

4. Procédé selon l'une des revendications précédentes, **caractérisé en ce qu'**une valeur de l'angle codée par l'information d'angle augmente lorsque la position entre la partie contactée (11) et une position de référence augmente, la distance étant mesurée le long d'une autre direction, l'autre direction étant orientée perpendiculairement à la première direction, ou **en ce que** la valeur de l'angle codé par l'information d'angle est proportionnelle à un angle entre la première direction et une ligne de liaison entre la position de la partie contactée (11) et la position de référence.

5. Procédé selon l'une des revendications précédentes, **caractérisé en ce qu'**une information concernant le contrôle de la marche n'est générée que si la zone d'entrée (8) est contactée dans une zone active, la zone active étant déplacée lors de l'exécution d'un mouvement de contact dans la zone d'entrée (8) correspondant au mouvement de contact.

6. Procédé selon l'une des revendications précédentes, **caractérisé en ce que** la zone active est disposée initialement dans une zone centrale de la zone d'entrée (8).

7. Procédé selon l'une des revendications précédentes, **caractérisé en ce que**, lors d'une perte de contact, une information concernant l'arrêt du véhicule (2) est générée.

8. Procédé selon l'une des revendications précédentes, **caractérisé en ce que**, en fonction de l'information de vitesse, une vibration du dispositif d'entrée tactile (7) est générée, au moins une propriété de la vibration étant différente pour des vitesses différentes ou des valeurs différentes des vitesses.

9. Procédé selon la revendication 8, **caractérisé en ce qu'**au moins une autre propriété de la vibration est différente pour des directions de marche différentes.

10. Procédé selon l'une des revendications précédentes, **caractérisé en ce qu'**un angle de direction d'un système de direction d'essieu arrière du véhicule (2) est réglé.

11. Procédé selon l'une des revendications précédentes, **caractérisé en ce que** la zone d'entrée (8) du dispositif d'entrée (7) est désactivée lorsqu'au moins une condition de fonctionnement pour le fonctionnement du véhicule (2) n'est pas remplie.

12. Procédé selon l'une des revendications précédentes, **caractérisé en ce que**, lors du contact d'au moins une partie d'une zone neutre (15) de la zone d'entrée du dispositif d'entrée tactile (7), au moins une information de direction de marche et une information de vitesse sont générées, l'information de vitesse codant une valeur nulle.

13. Dispositif de contrôle de la marche d'un véhicule (2) dans un attelage, le véhicule (2) comprenant un système de direction et un système d'entraînement, le système de direction et le système d'entraînement pouvant être contrôlés par au moins un dispositif de commande (6),
le dispositif comprenant au moins un dispositif d'entrée tactile (7) et au moins un dispositif d'analyse (6), une position d'une partie contactée (11) d'une zone d'entrée (8) du dispositif d'entrée tactile (7) pouvant être déterminée, moyennant quoi, au moyen du dispositif d'analyse (6), en fonction de la position de la partie contactée (11), un signal de commande peut être généré, moyennant quoi, au moyen du dispositif de commande (6), en fonction du signal de commande ou par l'intermédiaire du signal de commande, une direction de marche du véhicule (2) et une vitesse de marche du véhicule (2) et au moins un angle de direction (α_{L}) du véhicule (2) peuvent être réglés, moyennant quoi, en fonction de la position de la partie contactée (11), une information d'angle est générée, moyennant quoi, en tant qu'information pour le réglage de l'angle de direction (α_{L}), une information d'angle de pliage est générée si une information de direction de marche code une direction de marche arrière (R),
**caractérisé en ce que**
en tant qu'information pour le réglage de l'angle de direction (α_{L}), une information d'angle de direction est générée si l'information de direction de marche code une direction de marche avant (V), moyennant quoi, en fonction de la position de la partie contactée (11), l'infirmation de direction de marche, qui code une direction de marche avant ou une direction de marche arrière, et une information de vitesse peuvent être générées.
